# EUROPÄISCHE PATENTSCHRIFT

(11) **EP 0 937 107 B1**
(45) Veröffentlichungstag und Bekanntmachung des Hinweises auf die Patenterteilung: **05.12.2001**
(21) Anmeldenummer: 97945786.8
(22) Anmeldetag: 24.10.1997
(51) Int. Cl.: C08F 10/02, C08F 2/34

(54) **VERFAHREN ZUR HERSTELLUNG VON ULTRAHOCHMOLEKULAREM POLYETHYLEN UND METHODE ZUR AKTIVIERUNG DES KATALYSATORTRÄGERS**
PROCESS FOR PRODUCING POLYETHYLENE OF VERY HIGH MOLECULAR WEIGHT AND METHOD FOR ACTIVATING THE CATALYST SUPPORT
MODE DE FABRICATION DE POLYETHYLENE A POIDS MOLECULAIRE EXTREMEMENT ELEVE ET METHODE D'ACTIVATION DU SUPPORT DE CATALYSEUR

(30) Priorität: 07.11.1996 DE 19645939
(43) Veröffentlichungstag der Anmeldung: 25.08.1999
(73) Patentinhaber: Buna Sow Leuna Olefinverbund GmbH, 06258 Schkopau (DE)
(72) Erfinder: FRITZSCHE, Gerd, D-06268 Querfurt (DE); KERRINNES, Heinz-Jürgen, D-06128 Halle (DE); KREMTZ, Christian, D-06128 Halle (DE); MILOWSKI, Klaus, D-06130 Halle (DE)
(86) Internationale Anmeldenummer: DE9702475
(87) Internationale Veröffentlichungsnummer: WO9820054

(56) Entgegenhaltungen:
- EP-A- 0 337 365
- WO-A-94/28032
- DD-A- 294 719
- GB-A- 1 253 063

## Beschreibung

Die Erfindung betrifft ein Verfahren zur Herstellung von ultrahochmolekularem Polyethylen, das in einem Wirbelbett in der Gasphase mit einem Chromocen-Tragerkatalysator arbeitet.

Ultrahochmolekulare Ethylenpolymere und technologische Verfahren zu ihrer Herstellung in Anwesenheit von Ubergangsmetallkatalysatoren wie z.B. Ziegler-und Philips-Katalysatoren sind bekannt.

Bei derartigen Verfahren konnen Homo- und Copolymerisate des Bthylens im Dichtebereich von 0,915 bis 0,955 g/cm³ und mit mittleren Molmassen von > 1 x 10⁶ g/mol in Grießform erhalten werden. wobei in der Gasphase in einem durchmischten Schuttbett aus kleinteiligem Polymerisat unter Abfuhr der Reaktionswärme durch Kühlung des im Kreislauf geführten Reaktionsgases gearbeitet wird [Ullmanns Encyklopadie der technischen Chemie 4 (1980), (19), Seite 186; EP 0230019; EP 0260647; DE 3833444; DE 3833445].

Hierbei wird in Anwesenheit eines Titan enthaltenden Fällungskatalysators gearbeitet, bisweilen auch in zusatzlicher Gegenwart eines Antistatikums, wodurch Reaktorwandbeläge und Produktverschmutzungen vermieden werden und höhere Produktschüttdichten um 450 g/l erreicht werden.

Bekannt ist weiterhin, daß ultrahochmolekulares Polyethylen mit höherer Schuttdichte hergestellt wird in Gegenwart eines Mischkatalysators aus einer Al -organischen Verbindung mit einer Ti- Verbindung, die durch Reduktion einer Ti -[IV]- Verbindung hergestellt wird. wobei das Reduktionsprodukt danach mit einer Al- organischen Verbindung behandelt wird [EP 0645403; DE 4332786].

Weiterhin ist bekannt, daß mittels eines hochaktiven kugelförmigen Ziegler-Natta-Katalysators kugelförmige Polymerpartikel mit sehr guter Rieselfähigkeit und teilweise sehr hohen Molekularmassen mit MFI (190 °C/5 kg) um 0,05 g/10 min hergestellt werden konnen. Dabei wird der Katalysator erhalten. indem Di (organo)-Mg-Verbindungen zunächst Aluminiumtriethyl und 1-Chlorpropan zu einem Feststoff umgesetzt werden und danach mit Titanchloriden dotiert wird (DE 3620060).

Ein anderes bekanntes Verfahren zur Herstellung von ultrahochmolekularem Polyethylen mit Molmassen 1 Mio g/mol oder größer, mit Dichten zwischen 0,940 bis 0,950 g/cm³ und hoher Schlagfestigkeit ist dadurch charakterisiert, daß man in Mischkatalysatoren aus einer Alkylaluminiumkomponente und Titantetrachlorid als Alkylaluminiumkomponente ein Gemisch verwendet, das aus AlR₂X und Al (OR) RX besteht (DE 2724096).

Weiterhin bekannt ist ein Verfahren zur Herstellung eines katalytischen Systems vom Ziegler-Typ und die Herstellung von Polyethylen mit extrem hoher Molmasse (1 bis 3,5 Mio g/mol) mit diesem Katalysator, wobei der Katalysator vom Ziegler-Typ durch Imprägnierung eines spezifischen Aluminiumoxides mit einem Titanhalogenid hergestellt wird und anschließend mit Trialkylaluminium aktiviert wird ( DE 3837524).

Nach EP 0643078 können ultrahochmolekulare Ethenhomopolymere mit Molmassen von 1,8 bis 3,5 Mio g/mol oder Ethen-α-Olefin-Copolymere mit Molmassen um ca. 2 Mio g/mol hergestellt werden, indem als Katalysator Metallocen-Typ-Verbindungen des Titan, Zirkons oder Hafnium mit verbrückten, substituierten Cyclopentadienyl-Liganden in Gegenwart von Alumoxan eingesetzt werden.

Bekannt ist auch, daß solche Metallocen-Typ-Verbindungen von Titan, Zirkon oder Hafnium mit verbrückten oder nicht verbrückten, substituierten Cyclopentadienyl-Liganden in Gegenwart von Alumoxan-Aktivatoren vorteilhaft in polaren, aprotischen Solventen als Suspensionsmittel bei der Synthese von ultrahochmolekularem Polyethylen (z.B. mit Molmassen von 2.3 Mio g/mol bis 2.8 Mio g/mol) genutzt werden konnen (DE 4017331) und daß neben zahlreichen Ti-Katalysatoren auch Cr enthaltende Feststoffkatalysatoren, insbesondere auf der Grundlage von Organo-Chrom-Verbindungen in verschiedenen Oxidationsstufen und verschiedenen Liganden auf anorganischen Trägern zur Herstellung von Homo-und Copolymerisaten des Ethylens mit hoher bis sehr hoher Molmasse im Schmelzindexbereich von 0 bis 1000 dg/min (ASTM-D-1238-62 T) geeignet sind, die eine enge Molmassenverteilung haben. Durch Trägerung von Chromocen auf aktiviertem Silica werden aktive Katalysatorfeststoffe gewonnen, die Ethenhomo-und Copolymere mit α-Olefinen in der Gasphasen-Wirbelbett-Technologie in einem breiten Molmassen-Bereich bis zu sehr hohen Molmassen (Schmelzindex 0) bei enger Molmassenverteilung und Abwesenheit von internen und endständigen Doppelbindungen liefern (US 3709853; DE 1808388).

Durch Zusatz ausgewählter Silane zu solchen Trägerkatalysatoren aus Chromocen und Silica läßt sich in bekannter Weise die Katalysatorproduktivität ohne nachträgliche Wirkung auf die physikalischen Eigenschaften der damit hergestellten Polymerisate verbessern Auf diese Weise hergestellte Polymerisate umfassen Materialien mit Dichten von etwa 0,950 bis 0,960 g/cm³, einen Schmelzindex von etwa 0,01 oder mehr und Chromgehalte im Polymer von ≦ 1 ppm (DE 2113965).

Für den Fall, daß solche verschiedenartigen Organo-Cr-Verbindungen auf anorganischen Trägern aufgebracht, anschließend vor ihrem Einsatz in der Ethenpolymerisation thermisch gealtert, z B 0,5 bis 3 h bei T von 135 °C bis 900 °C, bevorzugt bei 300 bis 700 °C, und wahlweise mit einer Al-organischen Verbindung behandelt werden, können Homo-und Copolymere des Ethylens mit folgender Kennwertcharakteristik hergestellt werden (US 3806500; DE 2336227):

Dichte: 0,945 bis 0,970 g/cm³; Schmelzindex: 0 (kein Fluß) bis 30 g/10 min; analytisch nachweisbarer Gehalt an Kohlenstoff/Kohlenstoff-Doppelbindungen und Polymerseitenkettenverzweigungen (0,21 bis 1,02 CH₃/100 C).

Bekannt sind auch modifizierte, getragerte Chromocen-Katalysatorsysteme, die durch Zugabe eines Oxidationsmittels zu einem geträgerten Chromocen-Katalysator oder durch Beladen eines feinteiligen Trägers mit einem Oxidationsmittel und anschließender Zugabe von Chromocen und anschließender Zugabe eines Reduktionsmittels erhalten werden. Mit diesen lassen sich Polymerisate von Olefinen in der Gasphase, in einer Suspension, in flüssigen Monomeren oder in inerten Lösungsmitteln herstellen.

Die Polymerisate weisen eine breite Molmassenverteilung und hohe Dichtewerte auf. Erhältlich ist auch ein ultrahochmolekulares Polyethylen mit einer Grenzviskositat η von 20,6 dl/g und einer Dichte von 0.942 g/cm³ (DE 4306105).

Bekannt ist auch ein Polymerisationskatalysator für die Herstellung von Polyolefinen. z.B. Polyethylen. für Polymere mit breiten Molmasseverteilungen, wobei der Katalysator durch Auftragen eines Cyclopentadienyl-Chrom-Derivats der Formel RCrL auf einem phosphathaltigen, oxidischen Träger und einem Metallkomplex der Formel MR³R⁴R⁵R⁶ (M=Ti, Zr oder Hf) hergestellt wird und die Polymerisation in der Lösungs-, Slurry- oder Gasphasenpolymerisationstechnik durchgeführt wird. Die erhaltenen Polymere weisen MFI (190 °C, 2,16 kg)- Werte im Bereich von 0,001 bis 100 g/10 min auf (EP 0501672).

Es wurden auch phosphathaltige oxidische Träger wie Silica oder Aluminiumoxide zur Trägerung von Chromocen benutzt, um mit solchen Chromocen-Träger-Katalysatoren in der Slurry-Polymerisationstechnik Polyethylene eines breiten Polymermassenspektrums herzustellen. Dabei können auch ultrahochmolekulare Ethenpolymere mit Molmassen von mindestens 3 Mio g/mol mit einem hohem Grad an Methylverzweigungen von mindestens 0,4 mol-% Methylverzweigungen erhalten werden (EP 0090374).

Bekannt ist auch ein Verfahren zur Herstellung von Ethenhomopolymeren sowie Copolymeren. in dem ein Trägerkatalysator verwendet wird, der durch Auftragen einer Chrom-Kohlenwasserstoff-Komplexverbindung der Formel R Cr A Cr R mit vorzugsweise Cvclooctatetraen-Liganden auf einem feinteiligen, porösen anorganisch-oxidischen Trägerfeststoff dargestellt wird und der gegebenenfalls mit einer aluminiumorganischen Verbindung aktiviert wird. Die so erhaltenen Polymerisate weisen Schüttdichten von ca 370 bis 450 g/l und Molmassen eines sehr breit gestaltbaren Bereiches bis zu Schmelzindices MFI (190 °C/21,6 kg) von 0,5 g/10 min auf (DE 3030055).

Eine Vielzahl von Verarbeitungsverfahren für ultrahochmolekulares Polyethylen ist bekannt.

Die bekannten klassischen Verarbeitungsverfahren sind das Sintern unter Druck und die Ramextrusion; des weiteren wurde in zunehmendem Maße die Spritzgußtechnologie zur Verarbeitung von ultrahochmolekularem Polyethylen eingeführt (Kunststoffe 85 (1995), 4, Seite 477-481; Kunststoffe 83 (1993), 10, Seite 775-777; Kunststoffe 81 (1991), 9, Seite 809-811).

Auch das Gelspinnverfahren zu hochfesten, ultrahochmolekularen Polyethenfasern ist wohl bekannt (Plastverarbeiter 1991, 42 (12), 46-47; JP 59232123).

Die Mehrzahl der bekannten Polymerisationsverfahren zur Herstellung von ultrahochmolekularem Polyethylen ist auf die Herstellung eng verteilter, kleiner Partikelgrößen, markant unter 0,42 mm mittlerer Polymerpartikeldurchmesser, bei möglichst optimaler Schüttdichte sowie im Molmassenbereich > 1 x 10⁶ g/mol orientiert.

Meist sind verschiedenartige Maßnahmen zusätzlich nötig, um die die Wirtschaftlichkeit der Produktverarbeitung beeinflussenden Schüttdichten der Polymergrieße auf einem optimalen Niveau zu halten.

Wünschenswert sind Verfahren mit einfachen Prozeßgestaltungsmaßnahmen für einen variierbaren Partikelgrößenbereich auch im Bereich der Polymerpartikel > 0,42 mm auf einem unabhängig gleichbleibend sehr hohen Schüttdichteniveau und bei Beibehaltung des gewünschten ultrahochmolekularen Molmasseniveaus.

Ziel der Erfindung ist es, ein ultrahochmolekulares, hochzähes Polyethylen herzustellen, das für die Preßsinterverarbeilung und die Ramextrusion geeignet ist, das sich insbesondere durch ein einfaches Handling, durch eine optimale Formfüllung, durch die Variierbarkeit der Formkörperdicke und durch möglichst glatte Oberflächenbeschaffenheit der Formkörper bei gleichzeitig homogenem Eigenschaftsniveau über dem Formkörpervolumen auszeichnet. Dazu bestand die erfindungsgemäße Aufgabe, ein Verfahren zur Herstellung eines ultrahochmolekularen verbessert rieselfähigen Polyethylens in Grießform, das sich durch eine wahlweise Gestaltung der durchschnittlichen Partikelgröße im Bereich > 0,42 mm auf einem gleichbleibend erhöhten Schüttdichte-Niveau auszeichnet, sowie eine verfahrensspezifische Methode zur Katalysatorträgeraktivierung zu entwickeln.

Des weiteren bestand die Aufgabe, ein verbessertes Zähigkeitskennwertniveau bei gegebenem Molmasse- und Dichte-Niveau bei Gewährleistung der notwendigen Verarbeitungsstabilität zu erreichen.

Erfindungsgemäß wird die Aufgabe dadurch gelöst, daß bei der Polymerisationsreaktion in dem Gasphasen-Wirbelbett-Prozeß die Geschwindigkeit des Reaktionskreisgases zwischen 0,70 m/s und 0,88 m/s, die Polymerisationstemperatur zwischen 85 °C und 100 °C, die mittlere Mindestverweilzeit, ausgedrückt durch das Verhältnis von Polymerbettmasse und der aus dem Reaktor kontinuierlich ausgeschleusten Polymermasse, von 3,1 h, im Reaktionskreisgas eine Buten-1-Konzentration entsprechend einem Partialdruckverhältnis Buten-1/Ethen von 2,5 · 10⁻⁴ bis 25 · 10⁻⁴ mol/mol, beziehungsweise von 100 ppm bis 1000 ppm Buten-1 und ein CO₂-Gehalt von 1,2 bis 10 ppm bei simultaner Vermeidung von Wandbelägen im gesamten Reaktorkreisgassystem und bei simultaner Konstanthaltung der fluidisierenden Bettdichten in der eigentlichen Reaktorzone eingestellt wird und daß das Silica für die Herstellung des Chromocen-Silica- Katalysatorfeststoffes so aktiviert wird, daß der Masseverlust bei der thermischen Aktivierung des Silica zunächst auf 3,1 Ma-% bis 4,8 Ma-% eingestellt wird, in dieser Phase die Masseverlustgeschwindigkeit bei 37 °C bis 50 °C am höchsten ist und zunächst ab 132 °C bis 138 °C kein weiterer Masseverlust festzustellen ist und danach mit weiterer Temperatursteigerung der Masseverlust auf 0,45 Ma-% bis 1,9 Ma-% eingestellt wird, in dieser Phase die Masseverlustgeschwindigkeit bei 410 °C bis 440 °C am höchsten ist und daß kein weiterer Masseverlust ab 520 °C bis 540 °C auftritt und daß die höchste erreichte Temperatur nicht 580 °C überschreiten darf und das der auf diese Weise aktivierte Silica-Träger nur mit soviel Chromocen anschließend an die thermische Trägeraktivierung beladen werden darf, daß der Chromgehalt im trockenen Katalysatorfeststoff zwischen 0,9 bis 1,1 Ma-% Cr eingestellt wird.

Die Polymerisationsreaktion in dem Gasphasen-Wirbelbett-Prozeß wird vorzugsweise so eingestellt. daß die Geschwindigkeit des Reaktionskreisgases 0,74 m/s bis 0,85 m/s ist, daß eine Polymerisationstemperatur im Intervall zwischen 87 °C bis 95 °C gewählt wird und daß im Reaktionskreisgas eine Buten-1-Konzentration entsprechend einem Partialdruckverhältnis Buten-I/Ethen zwischen 6,0 · 10⁻⁴ mol/mol und 11 · 10⁻⁴ mol/mol beziehungsweise 500 ppm bis 800 ppm Buten-1 und ein CO₂ -Gehalt zwischen 1,5 ppm und 4,5 ppm gemessen wird.

Nach der Dotierungsreaktion des Trägers mit der Organo-Chromverbindung wird der separierte Katalvsatorfeststoff ohne jegliche thermische Alterung direkt in den Wirbelbettpolymerisationsprozeß eindosiert. Die Katalysatorproduktivität unter den erfindungsgemäß angewendeten Polymerisationsprozeßbedingungen ist mindestens 5 t Polyethylen/kg Katalysatorfeststoff, vorzugsweise 5,7 bis 12,5 t Polyethylen/kg Katalysatorfeststoff.

Die Aktivierung des Katalysatorträgers erfolgt vorzugsweise so, daß der Masseverlust bei der thermischen Aktivierung des Silica zunächst auf 4,1 Ma-% bis 4,3 Ma-% eingestellt wird, in dieser Phase die Masseverlustgeschwindigkeit bei 38,5 °C bis 47,5 °C am höchsten ist und zunachst ab 134 °C bis 136 °C kein weiterer Masseverlust festzustellen ist und danach mit weiterer Temperatursteigerung der Masseverlust auf 0,5 Ma-% bis 0,6 Ma-% eingestellt wird, in dieser Phase die Masseverlustgeschwindigkeit bei 420 °C bis 430 °C am höchsten ist und daß kein weiterer Masseverlust ab 530 °C auftritt und daß die hochste erreichte Temperatur nicht 580 °C überschreiten darf.

Die Polymermikrostruktur der erfindungsmäßen Polyethylene, z.B. der Polymerkettenverzweigungsgrad kann sowohl durch IR-Spektroskopie nach J.L. König (in Spectroscopy of Polymers ACS Professional Reference Book 1992, Seite 90-91) als auch durch NMR-Spektroskopie nach J.C. Randall (in ACS Symposium Series 142 (1980), Seite 100 sowie ACS-Symposium Series 247 (1984, Seite 245) ermittelt werden.

Beide Meßverfahren liefern identische Meßereebnisse hinsichtlich des Alkylgruppen-Substitutionsgrades der makromolekularen Polymerketten.

Zur Berechnung der viskosimetrisch ermittelten Polymermassen des erfindungsgemäßen Polyethylens werden die Konstanten K=6,7 x 10⁻² und a=0,69 (nach M.E.S. Habibe und M.C.A. Esperidiao in J.Polymer Sci. Part B, Polymer Phys. 33 (1995), 759-767) herangezogen.

Die erfindungsgemäß angewendeten Prozeßparameter des Wirbelbett-Polymerisationsprozesses: Reaktortemperatur, Kreisgasgeschwindigkeit und effektive Produktverweilzeit im Reaktor sowie die Einstellung definitiver Konzentrationswerte von Buten-1 und CO₂ im Reaktionskreisgas erlauben es, bei verschiedenen mittleren Polymerpartikeldurchmessern und gleichzeitig definiert begrenztem Polymerkornanteil < 0,25 mm einen hochschüttfähigen Polyethylen-Grieß mit einer mindestens um den Faktor 2 verbesserten Grießrieselfahigkeit gegenüber den bekannten Polymer-Grießen zu erzeugen.

Die erfindungsgemäßen Polymeren zeichnen sich durch ein graduell erhohtes Zähigkeitsverhalten aus. Als Maß dafür gilt die Kerbschlagzähigkeit (15 °- Doppel-Spitzkerbe; Normal-Kleinstab) (DIN 63453).

Erfindungsgemäß werden ultrahochmolekulare Polymere mit Viskositatszahlen von bis 3000 cm³/g erhalten.

Die erfindungsgemäßen Polymeren weisen bei Viskositätszahlen von 1455 bis 2450 cm³/g nach ISO 1191. Kerschlagzähigkeitskennwerte von 204 bis 210 mJ/mm² nach DIN 53453 auf und liegen damit graduell höher als bekannte, marktübliche ultrahochmolekulare PE-Typen mit 190-200 mJ/mm² bei Viskositätszahlen von etwa 2300 cm³/g.

Die erfindungsgemäßen Polymeren enthalten im Gegensatz zu solchen aus einigen bekannten Herstellungsverfahren keine korrosiv wirkenden Katalysatorrestbestandteile. Demzufolge zeigen die erfindungsgemäßen Polymeren keine korrosiven Wirkungen in den Verarbeitungseinrichtungen.

Die Beispiele 1-5 (Tabellen 1 und 2) verdeutlichen die Vorzuge des erfindungsgemäßen Verfahrens an Hand der Eigenschaftskennwerte der erzeugten Polymerisate, im Beispiel 6 wird die erfindungsgemäße Methode zur Aktivierung des Katalysatorträgers verdeutlicht.

### Erfindungsbeispiele 1-5

**Tabelle 1:**

| Prozeßparameter des Wirbelbett-Polymerisationsprozesses | | | | | | |
|---|---|---|---|---|---|---|
| | Dimension | Beispiel 1 | Beispiel 2 | Beispiel 3 | Beispiel 4 | Beispiel 5 |
| Reaktortemperatur | °C | 94,1 | 92,8 | 92,6 | 95 | 87 |
| Kreisgasgeschwindigkeit | m/s | 0,75 | 0,82 | 0,85 | 0,82 | 0,74 |
| Buten-1/Ethen-Molverhältnis | mol/mol | 23 x 10⁻⁴ | 10 x 10⁻⁴ | 8 x 10⁻⁴ | 8 x 10⁻⁴ | 6 x 10⁻⁴ |
| Polymerbettmasse | t | 13,51 | 12,40 | 12,50 | 12,40 | 11,30 |
| Eingespeiste Ethenmasse pro Zeit | t/h | 3,456 | 3,442 | 3,375 | 3,283 | 3,067 |
| Produzierte Polyethylenmasse pro Zeit | t/h | 3,409 | 3,392 | 3,324 | 3,237 | 3,025 |
| Katalysatorverbrauch pro Zeit | kg/h | 0,44 | 0,49 | 0,58 | 0,26 | 0,45 |
| Kohlendioxidgehalt des Reaktionskreisgases | ppm | 0 | 3,2 | 4,2 | 2,0 | 1,5 |

**Tabelle 2:**

| Eigenschaftskennwerte der Polymerisate: | | | | | | | |
|---|---|---|---|---|---|---|---|
| | Dimension | Bestimm - methode. Norm | Beispiel 1 | Beispiel 2 | Beispiel 3 | Beispiel 4 | Beispiel 5 |
| Viskositätszahl | cm³/g | ISO 1191 | 1455 | 2230 | 2200 | 2450 | 3040 |
| Dichte bei 23 °C (Platte) | g/cm³ | ISO 1183 DIN 53479 | 0.936 | 0.934 | 0.935 | 0.933 | 0.929 |
| Schutidichie | g/l | DIN 53468 | 504 | 520 | 491 | 500 | 490 |
| Rieselfähigkeit | g/s | DIN 53492 | 9.67 | 9.74 | 9.26 | 9.77 | 9.70 |
| Mittlere Partikelkorngröße | mm | DIN 53477 | 0.80 | 1.05 | 0.85 | 0.75 | 0.70 |
| Partikelkornanteil < 0.25 mm | % | | 3.3 | 1.3 | 3.2 | 3.9 | 5.9 |
| Katalysator-Restgehalt im PE-Pulver Asche-Gehalt | [Ma-ppm] | | 130-140 | 140-160 | 170-180 | 40-70 | 100-120 |
| SiO₂-Gehalt | [Ma-ppm] | | 120-140 | 140-150 | 150-170 | 70-90 | 90-110 |
| Cr-Gehalt | [Ma-ppm] | | 2.1 | 2.3 | 2.8 | 1.3 | 1.8 |
| Polymerkettenverzweigungsgrad | [R/100C] | FT-IR. C¹³-NMR | 0.27 | 0.24 | 0.23 | 0.21 | 0.1 |
| Schmelzverhalten | | | | | | | |
| Schmelzbeginn | [°C] | DTA | 130.5; 131.3 | 130.2 | 131.2 | 132.5 | 132.4 |
| Schmelzmaximum | [°C] | DTA | 141.6 | 141 | 142 | 143 | 143 |
| Oxidationsverhalten | | | | | | | |
| Oxidationsbeginn | [°C] | DTA | 163,4 | 163 | 164 | 164 | 164 |
| O₂-Anlagerung | [%] | DTA | 0.88 | 0.87 | 0.90 | 0.95 | 0.92 |
| Streckspannung | [N/mm²] | ISO 527 | 21.2 | 19 | 20 | 20 | 20 |
| Streckdchnung | [%] | ISO 527 | 12.3 | 12.9 | 12.6 | 13.1 | 13.0 |
| Shore-Härte D 3-sec-Wert (Platte mind 6 mm) | - | DIN 53505 | 58 | 63 | 63 | 63 | 63 |
| Kerbschlagzahigkeit Doppelspitzkerbe (15°); Normal Kleinstab | mJ/mm² | DIN 53453 | 209 | 209 | 210 | 204 | 140 |
| Verschleißfestigkeit (Relativer Verschleiß zu Hostalen GUR 4120=100% Sand-Slurry-Test 24 h/1200 m⁻¹) | [%] | in Anlehnung an DIN 58836 | 130 | 106 | 108 | 98 | 85 |

### Beispiel 6

Kommerziell verfugbares amorphes Silica, z.B des Typs Sylopol 955 w. wird zur Herstellung des Chromocen-Silica-Katalysatorfeststoffes so aktiviert, daß der Masseverlust bei der thermischen Aktivierung des Silica zunächst auf 4,1 Ma-% bis 4,3 Ma-% eingestellt wird, daß in dieser Phase die Masseverlustgeschwindigkeit bei 38,5 °C bis 47,5 °C am höchsten ist und zunächst ab 134 °C bis 136 °C kein weiterer Masseverlust festzustellen ist und danach mit weiterer Temperatursteigerung der Masseverlust auf 0,5 Ma-% bis 0,6 Ma-% eingestellt wird, in dieser Phase die Masseverlustgeschwindigkeit bei 420 °C bis 430 °C am höchsten ist und daß kein weiterer Masseverlust ab 530 °C auftritt und daß die höchste erreichbare Temperatur 580 °C nicht überschreiten darf.

Der auf diese Weise thermisch aktivierte Katalysatorträger Silica wird in üblicher Weise in einem Kohlenwasserstoff-Slurry mit sowohl Chromocen beladen, daß der Chromgehalt im aus dem Kohlenwasserstoff-Slurry isolierten Katalysatorfeststoff auf 1,1 Ma-% Chrom eingestellt ist.

## Patentansprüche

1. Verfahren zur Herstellung von ultrahochmolekularem Polyethylen nach dem Polymerisationsverfahren in einem Wirbelbett in der Gasphase in Gegenwart eines Trägerkatalysatorfeststoffes aus Chromocen auf thermisch aktiviertem Silica **dadurch gekennzeichnet, daß** bei der Polymerisationsreaktion in dem Gasphasen-Wirbelbett-Prozeß die Geschwindigkeit des Reaktionskreisgases zwischen 0,70 m/s und 0,88 m/s, die Polymerisationstemperatur zwischen 85 °C und 100 °C, die mittlere Mindestverweilzeit, ausgedruckt durch das Verhältnis von Polyethylenbettmasse und der aus dem Reaktor kontinuierlich ausgeschleusten Polyethylenmasse, von 3,1 h, im Reaktionskreisgas eine Buten-1-Konzentration entsprechend einem Partialdruckverhältnis Buten-1/Ethylen von 2,5 · 10⁻⁴ mol/mol bis 25 · 10⁻⁴ mol/mol beziehungsweise von 100 ppm bis 1000 ppm Buten-1 und ein CO₂-Gehalt von 1,2 ppm bis 10 ppm bei simultaner Vermeidung von Wandbelägen im gesamten Reaktorkreisgassystem und bei simultaner Konstanthaltung der fluidisierenden Bettdichten in der eigentlichen Reaktionszone eingestellt wird.

2. Methode zur Aktivierung des Katalysatorträgers fur das Verfahren nach Anspruch 1 **dadurch gekennzeichnet, daß** das Silica für die Herstellung des Chromocen-Silica-Katalysatorfeststoffes so aktiviert wird, daß der Masseverlust bei der thermischen Aktivierung des Silica zunächst auf 3,1 Ma-% bis 4,8 Ma-% eingestellt wird, in dieser Phase die Masseverlustgeschwindigkeit bei 37 °C bis 50 °C am hochsten ist und zunächst ab 132 °C bis 138 °C kein weiterer Masseverlust festzustellen ist und danach mit weiterer Temperatursteigerung der Masseverlust auf 0,45 Ma-% bis 1,90 Ma-% eingestellt wird, in dieser Phase die Masseverlustgeschwindigkeit bei 410 °C bis 440 °C am höchsten ist und daß kein weiterer Masseverlust ab 520 °C bis 540 °C auftritt und daß die höchste erreichte Temperatur nicht 580 °C überschreiten darf und daß der auf diese Weise aktivierte Silica-Träger nur mit soviel Chromocen anschließend an die thermische Trageraktivierung beladen werden darf, daß der Chromgehalt im trockenen Katalysatorfeststoff zwischen 0,9 Ma-% bis 1,1 Ma-% Cr eingestellt wird.

3. Verfahren nach Anspruch 1 **dadurch gekennzeichnet, daß** die Geschwindigkeit des Reaktionskreisgases auf 0,74 m s bis 0,85 m/s eingestellt wird.

4. Verfahren nach Anspruch 1 **dadurch gekennzeichnet. daß** die Polymerisationsreaktortemperatur auf 87 °C bis 95 °C eingestellt wird.

5. Verfahren nach Anspruch 1 **dadurch gekennzeichnet, daß** im Reaktionskreisgas eine Buten-1-Konzentration entsprechend einem Partialdruckverhaltnis Buten-1/Ethylen von 6,0 · 10⁻⁴ mol/mol bis 11 · 10⁻⁴ mol/mol beziehungsweise 500 ppm bis 800 ppm Buten-1 eingestellt wird.

6. Verfahren nach Anspruch 1 **dadurch gekennzeichnet, daß** im Reaktionskreisgas CO₂-Gehalte von 1,5 ppm bis 4,5 ppm eingestellt werden.

7. Verfahren nach Anspruch 2 **dadurch gekennzeichnet, daß** der Masseverlust bei der thermischen Aktivierung des Silica zunächst auf 4,1 Ma-% bis 4,3 Ma-% eingestellt wird, in dieser Phase die Masseverlustgeschwindigkeit bei 38,5 °C bis 47,5 °C am höchsten ist und zunächst ab 134 °C bis 136 °C kein weiterer Masseverlust festzustellen ist und danach mit weiterer Temperatursteigerung der Masseverlust auf 0,5 Ma-% bis 0,6 Ma-% eingestellt wird, in dieser Phase die Masseverlustgeschwindigkeit bei 420 °C bis 430 °C am höchsten ist und daß kein weiterer Masseverlust ab 530 °C auftritt und daß die höchste erreichte Temperatur nicht 580 °C überschreiten darf.

## Claims

1. A process to produce ultra-high-molecular polyethylene according to the polymerization process in a fluidized bed in the gaseous phase and in the presence of a solid catalyst carrier of chromocene on thermally activated silica whereby the velocity of the reaction circulation gas of the polymerization reaction in the gaseous phase fluid bed process is adjusted between 0.70 m/sec. and 0.88 m/sec., the polymerization temperature is adjusted between 85°C and 100°C, and the mean minimum retention time, expressed as the ratio between the polyethylene bed weight and the polyethylene weight continuously discharged from the reactor, is adjusted to 3.1 hr., and a 1-butene concentration according to a partial pressure ratio 1-butene/ethylene of 2.5 x 10⁻⁴ mole/mole thru 25 x 10⁻⁴ mole/mole or of 100 ppm to 1,000 ppm 1-butene, and a CO₂ content of 1.2 ppm to 10 ppm are adjusted while avoiding fouling on the walls of the whole reactor circulation gas system and while maintaining constant fluidizing bed densities within the reaction zone as such.

2. A method to activate the catalyst carrier for the process according to claim 1 above, whereby silica is used to activate the chromocene-silica solid catalyst in a way that the weight loss during the thermal activation of the silica is adjusted to 3.1 percent by weight to 4.8 percent by weight at first, that the weight loss rate is highest in this phase at 37°C to 50°C and that no further weight loss is observed from 132°C to 138°C, and that the weight loss is adjusted to 0.45 percent by weight to 1.90 percent by weight as the temperature rises further and that the weight loss rate in this phase is highest at 410°C to 440°C and that no further weight loss is observed from 520°C to 540°C and that the highest temperature reached should not exceed 580°C, and whereby the silica carrier thus activated should be loaded with so much chromocene after said thermal activation only that the chromium content in the dry solid catalyst is adjusted between 0.9 percent by weight to 1.1 percent by weight Cr.

3. A process according to claim 1 above, whereby the velocity of the reaction circulation gas is adjusted to 0.74 m/sec. to 0.85 m/sec.

4. A process according to claim 1 above, whereby the polymerization reactor temperature is adjusted to 87°C to 95°C.

5. A process according to claim 1 above, whereby a 1-butene concentration according to a partial pressure ratio 1-butene/ethylene of 6.0 x 10⁻⁴ mole/mole to 11 x 10⁻⁴ mole/mole or of 500 ppm to 800 ppm 1-butene is adjusted in the reaction circulation gas.

6. A process according to claim 1 above, whereby a CO₂ content of 1.5 ppm to 4.5 ppm is adjusted in the reaction circulation gas.

7. A process according to claim 2 above, whereby the weight loss during the thermal activation of the silica is adjusted to 4.1 percent by weight to 4.3 percent by weight at first and whereby the weight loss rate in this phase is highest at 38.5°C to 47.5°C and no further weight loss is observed at 134°C to 136°C and whereby the weight loss is then adjusted to 0.5 percent by weight to 0.6 percent by weight as the temperature rises further and whereby the weight loss rate in this phase is highest at 420°C to 430°C and whereby no further weight loss is observed from 530°C and whereby the highest temperature reached should not exceed 580°C.

## Revendications

1. Procédé de fabrication de polyéthylène de très haut poids moléculaire d'après le procédé de polymérisation dans un lit fluide en phase gazeuse en présence d'une matière solide de catalyseur sur support en chromocène sur de la silice thermiquement activée, **caractérisé par le fait que** sont réglées lors de la réaction de polymérisation dans le processus à lit fluide et à phase gazeuse la vitesse du gaz du circuit de réaction entre 0,70 et 0,88 m/s, la température de polymérisation entre 85 et 100 °C, la durée moyenne de séjour minimale de 3,1 h exprimée par le rapport de la masse de polyéthylène en lit et la masse de polyéthylène éjectée continuellement du réacteur, dans le gaz du circuit de réaction une concentration de butylène - 1 correspondant à un rapport de pression partielle de butylène-1/éthylène de 2,5 x 10⁻⁴ mol/mol jusqu'à 25 x 10⁻⁴ mol/mol respectivement de 100 ppm jusqu'à 1 000 ppm de butylène-1 et une teneur en CO₂ de 1,2 ppm jusqu'à 10 ppm en évitant en même temps les dépôts muraux dans tout le système du gaz du circuit du réacteur et tout en gardant constantes les épaisseurs de lit fluidisant dans la zone de réaction proprement dite.

2. Méthode d'activation du support de catalyseur pour le procédé selon la revendication 1, **caractérisée par le fait que** la silice servant à la fabrication de la matière solide du catalyseur en chromocène-silice est activée de sorte que la perte de masse lors de l'activation thermique du silice est tout d'abord réglée à 3,1 % de la masse jusqu'à 4,8 % de la masse, que dans cette phase la vitesse de perte de masse est la plus haute de 37 °C jusqu'à 50 °C et qu'ensuite il n'est plus constatée de perte de masse à partir de 132 °C jusqu'à 138 °C et qu'ensuite si la température continue à monter, la perte de masse est réglée à 0,45 % de la masse jusqu'à 1,90 % de la masse, que dans cette phase la vitesse de perte de masse est la plus élevée par 410 °C jusqu'à 440 °C et qu'il n'y a plus de perte de masse à partir de 520 °C jusqu'a 540 °C et que la température la plus haute ne doit pas dépasser 580 °C et que le support de silice activé de cette manière ne doit être chargé de chromocène après l'activation thermique du support que dans la mesure où la teneur de chrome dans la matière solide sèche de catalyseur soit réglée entre 0,9 % de la masse jusqu'à 1,1 % de la masse.

3. Procédé selon la revendication 1 **caractérisé par le fait que** la vitesse du gaz du circuit de réaction est réglée à 0,74 m/s jusqu'à 0,85 m/s.

4. Procédé selon la revendication 1 **caractérisé par le fait que** la température du réacteur de polymérisation est réglée à 87 °C jusqu'à 95 °C.

5. Procédé selon la revendication 1 **caractérisé par le fait que** dans le gaz du circuit de réaction une concentration de butylène -1 est réglée en fonction d'un rapport de pression partielle de butylène -1/éthylène de 6,0 x 10⁻⁴ mol/mol jusqu'à 11 x 10⁻⁴ mol/mol respectivement de 500 ppm jusqu'à 800 ppm de butylène -1.

6. Procédé selon la revendication 1 **caractérisé par le fait que** dans le gaz du circuit de réaction les teneurs en CO₂ sont réglées de 1,5 ppm jusqu'à 4,5 ppm.

7. Procédé selon la revendication 2 **caractérisé par le fait que** la perte de masse lors de l'activation thermique de la silice est réglée tout d'abord à 4,1 % de la masse jusqu'à 4,3 % de la masse, dans cette phase la vitesse de perte de masse étant la plus haute par 38,5 °C jusqu'à 47,5 °C et qu'aucune autre perte de masse est ensuite constatée à partir de 134 °C jusqu'à 136 °C et qu'après suite à l'augmentation de température suivante la perte de masse est réglée à 0,5 % de la masse jusqu'à 0,6 % de la masse, dans cette phase la vitesse de perte de masse étant la plus élevée par 420 °C jusqu'à 430 °C et qu'il n'y a plus de perte de masse à partir de 530 °C et que la température réalisée la plus haute ne doit pas surpasser 580 °C.
